# EUROPEAN PATENT APPLICATION

(11) **EP 1 288 789 A2**
(43) Date of publication of application: **05.03.2003**
(21) Application number: 02254390.4
(22) Date of filing: 24.06.2002
(51) Int. Cl.: G06F 17/21, G06F 17/22

(54) **Method and apparatus to receive data from a portable memory device and generate personalized print items**

(30) Priority: 29.06.2001 US 893480
(71) Applicant: Xerox Corporation, Rochester, New York 14644 (US)
(72) Inventor: Leone III, ANthony J., Pittsford, New York 14534 (US); Kavanagh, David A., Rochester, New York 14624 (US)
(74) Representative: Skone James, Robert Edmund

(57) **Abstract**

A printing apparatus (10) adapted to access data transmitted from a portable memory device, such as a hand-held organizer or similar device (14). Data received from the portable memory device (14) can be incorporated into an output print to provide a business card or other personalized print item. A data template stored in the printing apparatus provides a structure for specifying the printed format of the data transmitted from the portable memory device.

## Description

This invention relates generally to a methodology and apparatus for creation and printing of a personalized print item, and more particularly, to a methodology and printing apparatus adapted to accept data transferred from a portable memory device, to format the data according to operator instructions, and to generate a personalized print item that utilizes the transferred data.

Apparatus for generation of personalized prints, such as business cards, greeting cards, brochures, invitations and similar printed products allow a customer to select a suitable design from among a number of available designs and to then customize the selected design by specifying the text content or by inputting an image from a scanned photo or other source. To operate an apparatus that produces personalized prints, an operator (usually a customer or possibly a store clerk assisting a customer) selects a type of printed product from a set of displayed options on a display monitor. Once the operator specifies the type of printed product, the apparatus prompts the operator to enter or select the appropriate text to be inserted within predetermined locations in the design and prompts the operator to scan a photo image (or to input an image from some other source) for display on the card or other printed product.

Such apparatus typically stores each design layout as a data template. A data template can include such information as size, background, color, text font and placement, index position for customer photo, optional text areas, and similar information. The apparatus typically store multiple templates in a database of some type, as is disclosed in US-A-5,765,142 and US-A-5,056,029.

Among the various available methods that can be used to define a product template there are a number of page-definition languages and standards for data presentation. One exemplary standard in current use is XML (Extensible Markup Language), which is the result of an adaptation of the fully featured SGML (Standard Generalized Markup Language, ISO 8879; 1986(E)), specifically adapted to represent data, including documents. XML allows a designer to define specific components for a document and to define how these components are displayed and to specify valid data fields for each component. To contain the set of definitions for individual data elements, XML uses a Data Type Dictionary (DTD) that defines valid fields. This arrangement allows widespread use of a document published using XML. Using an XML file and its associated DTD, an application program can then determine how to publish the XML data.

XML itself provides a way of representing a document as data. An application program can access an XML representation and provide a print, using this XML representation as its source. To populate the XML representation with specific personalized text content, an operator interface can prompt an operator to enter text fields for the print, such as the text normally required on a standard business card. However, there are a number of drawbacks to operator entry of text from a keyboard or from a touch-screen. Operator error, such as misspelling or transposing numerical digits can make a printed business card unacceptable or embarrassing for use. For example, transposed digits or an error in an email address entry can frustrate attempts to reach the person who provides a business card. Therefore, it can be seen that there are advantages to automation of text field entry, where this can help to minimize errors on a printed business card or similar product.

There is felt to be significant benefit in obtaining information from business cards and storing this information electronically. In response to this need, hand-held portable memory devices routinely store business card data electronically. One example of a portable device of this type is the Palm-series organizer from Palm™, Inc., Santa Clara, California. Combining a small display with memory and some data processing capabilities, hand-held portable devices of this type are widely used to store identifying contact information (that is, information typically available from a business card) for ready access. Additionally, other types of portable memory devices, described subsequently, are also available for storing the types of identifying and contact information that are typically provided on a business card.

Types of portable memory devices include cards having an embedded magnetic strip, such as credit cards or ID cards, and Smart Cards that may even include logic processor circuitry. It can be advantageous to store business card information on such card-based devices. Card-based devices can be easily scanned to read stored data and to provide this data to a printing apparatus, such as for example by swiping cards through a peripheral scanner.

Despite the fact that there are electronic means for storing and transferring business card data from one computer or device to another, never-the-less, the need for paper business cards remains. Sales representatives and other field contact personnel who deal directly with customers still often need some form of paper business card that can be handled, viewed, pocketed, and stored without requiring an electronic device. In order to meet this need, there are advantages to providing a means for printing business cards or other personalized print items such as brochures, transparencies, etc. in an "on-demand" fashion, using data that is easily stored on a portable memory device. Given the access and capability for on-demand printing, a sales representative for example, who is not carrying a sufficient number of business cards could quickly obtain a small number of cards in the morning for an upcoming meeting that same afternoon.

Therefore, as discussed above, while there are existing methods for electronic transfer and electronic storage of business card data on a portable memory device, there is a need for an apparatus that can obtain this business card data electronically and print a paper business card using this obtained data. Thus, it would be desirable to solve this and other deficiencies and disadvantages with an apparatus for creation and printing of personalized print items.

The present invention relates to a method for a printer apparatus to provide personalized print items, where the printer apparatus receives data from a portable memory device and then prompts the operator to select a product template resident in the printer apparatus. When that selection is complete the printer apparatus then prompts the operator to select at least one field entry from the data. The field entry is then assembled into the product template. The last step is then printing the assembled result as a personalized print item.

More particularly, the present invention relates to a printing system apparatus for providing a personalized print item from a portable memory device. The printing system apparatus comprises a reader for receiving data from the portable memory device, at least one product template stored in a memory, and a print engine. The reader receives data which is placed into the product template to produce a result that is then printed by the print engine.

In particular, the present invention relates to a method for a printer system to provide personalized print items, the printer system apparatus executing steps comprising accessing a portable memory device and then receiving data from the portable memory device. This is followed by assembling the data into a pre-stored product template found in the printer system, and then printing the resultant personalized print item.

Some examples of methods and apparatus according to the present invention will now be described with reference to the accompanying drawings, in which:-
Figure 1 is a block diagram view showing the system arrangement and printing apparatus of an example of the present invention;
Figure 2 is a view of an operator interface screen on a portable memory device;
Figure 3 is a view showing a segment of a data file that stores business card information on a portable memory device;
Figure 4 is a view showing an operator interface screen;
Figure 5 shows a plane view of a business card prepared using the operator interface of Figure 4 and example data given in Figure 3; and,
Figures 6 and 7 show a data template and its information.

The term "product template", or more generally "template" as used here, refers to a structured data format for representing the composition of a printed product as a layout comprising graphical components. The contents of a product template can include such information as text font, placement and size parameters, image sizing and scaling information, image filename, and other data, as is described below.

As used in this detailed description, the term "portable memory device" refers to any of a number of different types of portable devices that contain a memory, where the memory stores information that is capable of being included on a print. Examples of portable memory devices include, but are not limited to, the following:
(a) A Personal Digital Assistant (PDA), such as a hand-held organizer. Exemplary devices of this type include the Palm-series organizers from Palm™, Inc., as noted above;
(b) a portable electronic calendar or portable computer, such as the WorkPad C3 PC Companion, manufactured by IBM™, Inc. or the Pocket PC from Microsoft™, Inc.;
(c) a storage device such as an iButton, manufactured by Dallas Semiconductor™ Corp., Dallas, TX. These devices comprise a memory storage component that is capable of communication upon contact with a sensor or reader for memory transfer;
(d) an RF transponder with an attached memory, such as a Tag-It™ inlay device or TIRIS glass capsule transponder, manufactured by Texas Instruments™, Inc., Dallas, TX. RF transponders can be attached to devices or documents or provided on a key-chain or other portable device and are widely used for identification purposes;
(e) a device having a magnetic strip, such as an ID card, credit card, Smart Card or other item. Increasingly, devices such as credit cards, ID cards, and other personal identification items have some amount of stored information that can be scanned in a reader or otherwise accessed using scanning methods for use with the apparatus of the present invention.

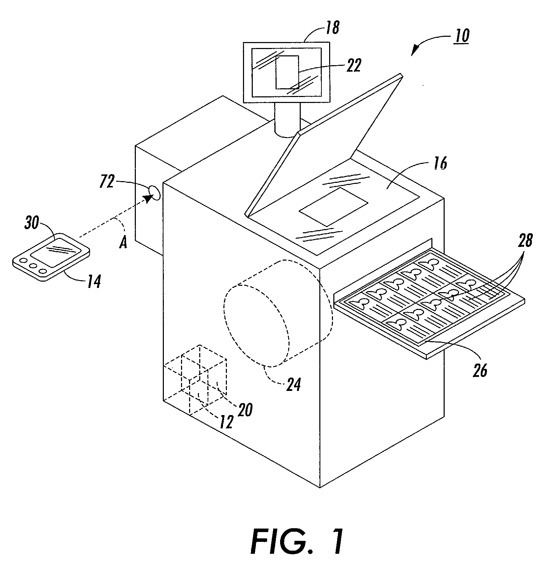

One embodiment of the present invention , such as is shown in Figure 1, uses a hand-held organizer or PDA as a portable memory device 14. Portable memory device 14 may comprise an operator interface screen 30 (such as the LED-based display that is built-in with PDA devices.) However, it must be emphasized that portable memory device 14 can be embodied as any of a number of devices as in the example listing above and may or may not include an operator interface component.

In one embodiment of the present invention, wireless communication is utilized with portable memory device 14. Wireless communication can include the use any of a number of signal types. Examples of signal types may include but should not be limited to the following:
(a) Infrared signals. Currently, many types of PDAs employ infrared communication to upload and download data with a PC. One embodiment of the present invention utilizes infrared communication between printing apparatus 10 and a PDA.
(b) RF signals. This can include low-frequency RF transponders (such as the TIRIS series devices noted above) or devices that provide signals in AM or FM bands or in other frequency ranges. This could also include RF devices compatible with Bluetooth wireless technology, based on standards from the Bluetooth Industry Group (an industry consortium including companies such as Telefonaktiebolaget LM Ericsson, Intel Corporation, International Business Machines Corporation, Nokia Corporation, and Toshiba Corporation). Bluetooth technology allows high-speed data transfer in a wireless fashion, between electronic devices.

Other arrangements to automate transfer of memory data from portable memory device 14 are various alternatives to wireless transmission that may provide automated access to information stored in a memory. One example found among these alternatives is utilizing a magnetic strip, such as is currently used on credit cards and plastic ID badges. Magnetic strip-encoded data can be scanned using a scanner device to transfer stored data quickly.

Figure 1 shows a one possible printing system apparatus 10 adapted to accept data transferred from a portable memory device 14 and to produce a personalized print item 26 incorporating this data. Printing system apparatus 10 in one embodiment comprises a central processing unit, CPU 12 or other logic device, which could be a suitably configured microprocessor, a display monitor 18, and a print engine 24. In a more preferred embodiment, all of the above are arranged in a single box to comprise the printing system apparatus 10. Print engine 24 may be any high-quality hardcopy printer type such as a laser/xerographic, ink jet, or solid ink type. Display monitor 18 may more preferably employ a touchscreen interface, eliminating the need for keyboard for data entry. A software application 22 running on the CPU 12 accesses data from portable memory device 14. Software application 22 provides a user interface on display monitor 18 for prompting the operator response to specify the contents of personalized print item 26. The application 22 then generates the print data for personalized print item 26 and controls printer 24. An optional scanner 16 allows output print 26 to include a scanned image along with text. In another embodiment, personalized print item 26 contains multiple copies of business cards 28, each of which may include a scanned image.

A reader 72, coupled to CPU 12, performs the data access operation whereby information is received from portable memory device 14, possibly over a wireless transmission channel, denoted A in Figure 1. The type of reader 72 used depends on the signal type that is employed, for example:
(a) Infrared signals. One preferred embodiment of the present invention employs an IR reader, similar to readers currently in use with PDA devices. IR sensors are currently built into many types of portable laptop computers and similar devices. In a one embodiment, workstation 12 is provided with an IR reader, such as a model 220L IrDA Com-Port Serial Adapter from ACTiSYS Corporation, Fremont CA.
(b) RF signals. A reader for RF signal could use a Bluetooth-compatible receiver device, for example. Alternately, where memory is coupled to an RF transponder (as with the Tag-It or TIRIS devices noted above), the corresponding reader would be an RF transceiver tuned to the appropriate transmission frequency for communication with the RF transponder.
(c) Magnetic strips. A magnetic strip reader, similar to those used for standard credit card transactions, could alternately be used. (In such a case, transmission channel A would not be used.)

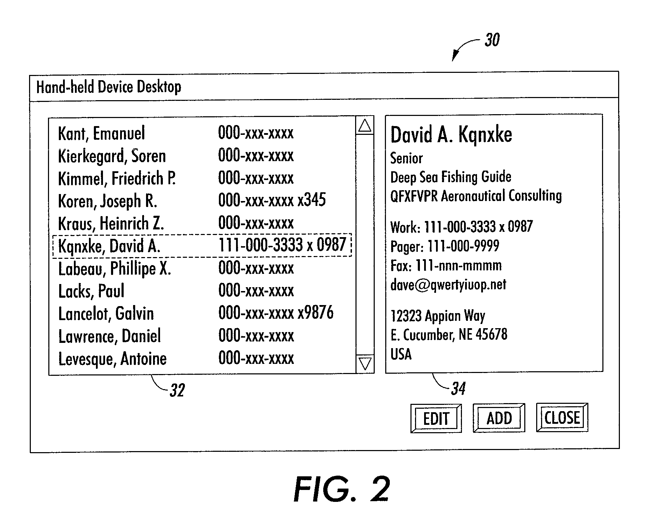

Figure 2 depicts a typical operator interface screen 30 on portable memory device 14 and one possible arrangement of data upon that screen 30. As can be seen in Figure 2 operator interface screen 30 contains an electronic phonebook. A name window 32 contains a scrollable listing of names and phone numbers. Highlighting a name (typically using a stylus or other device) displays data on that person in an information window 34.

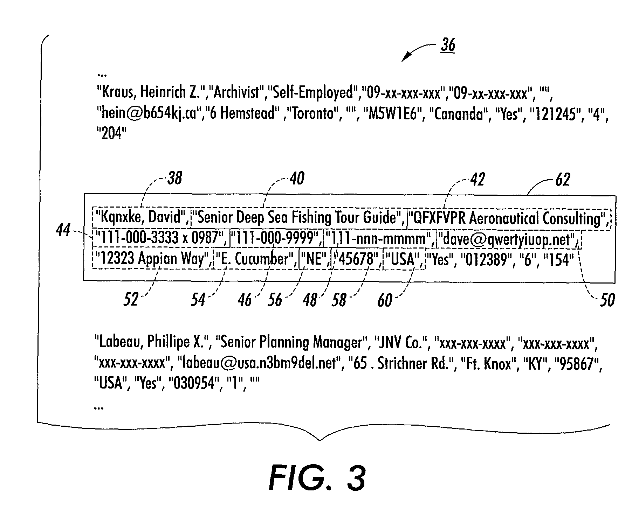

Figure 3 shows a segment of an electronic phonebook file 36 showing representative electronic phonebook entries stored on portable memory device 14. Electronic phonebook entries are typically stored in ASCII form, with individual fields delimited within quotes and comma-separated; although, as will be obvious to those skilled in the art, many other arrangements are possible. The information found within a field is referred to as field entry, and thus entry 62 is comprised of field entries. As Figure 3 shows, an electronic phonebook entry 62 may comprise a number of text fields, such as the following: a name field 38; a title field 40; an employer field 42; a phone number field 44; a pager number field 46; a fax number field 48; an email address field 50; a street address field 52; a city field 54; a state field 56; a mail code field 58; and a country field 60. As will be apparent to those skilled in the art, there may also be any number of additional fields for recording other information in entry 62.

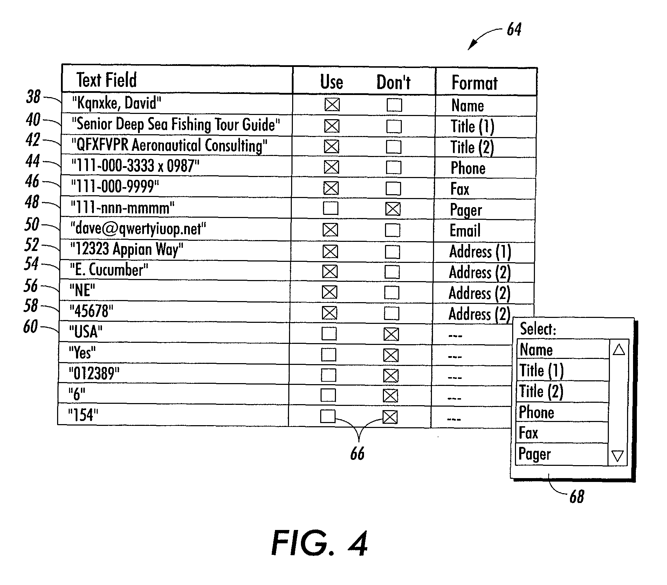

Referring again to Figure 1, a transmission operation, represented by dotted line A, transfers specific information from portable memory device 14 to print system 10 and CPU 12. Using mechanisms well known in the art for transferring data fields from portable memory device 14 to CPU 12, one electronic phonebook entry 62 is transferred and received at CPU 12. In one example embodiment, where printing a user's business card is desired, the user's own phonebook entry 62 is transferred to CPU 12. Software application 22 receives the transfer of phonebook entry 62 data and presents the user with a format interface screen 64, one possible arrangement for such is shown in Figure 4. Using methods well-known in the programming art, application 22 presents each of the data fields referenced in Figure 3 separately and prompts the user to assign a format name to each data field. For each data field, the user responds by setting the state of a checkbox 66 on the display monitor 18 touchscreen, or using some other on-screen mechanism. When the user opts to use a text field on output print 26, format interface screen 64 presents a pop-up menu 68 that allows the user to make a format assignment for the text field.

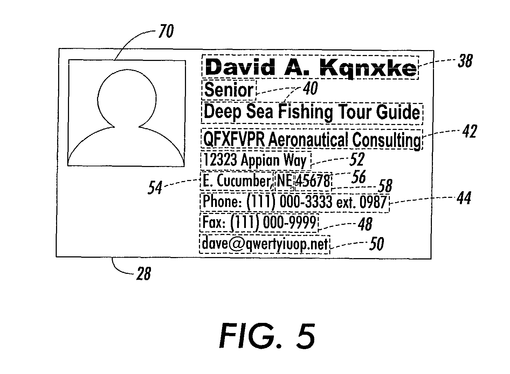

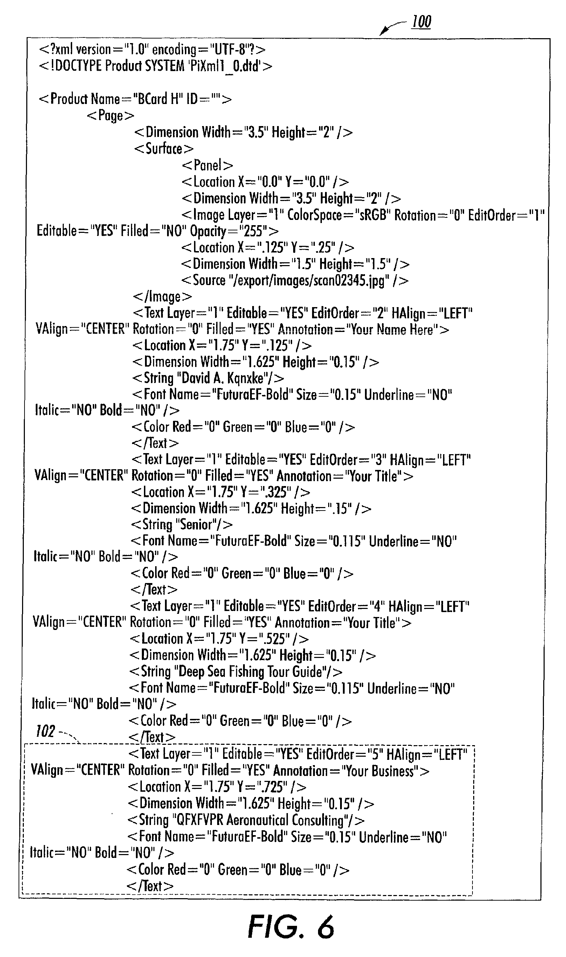

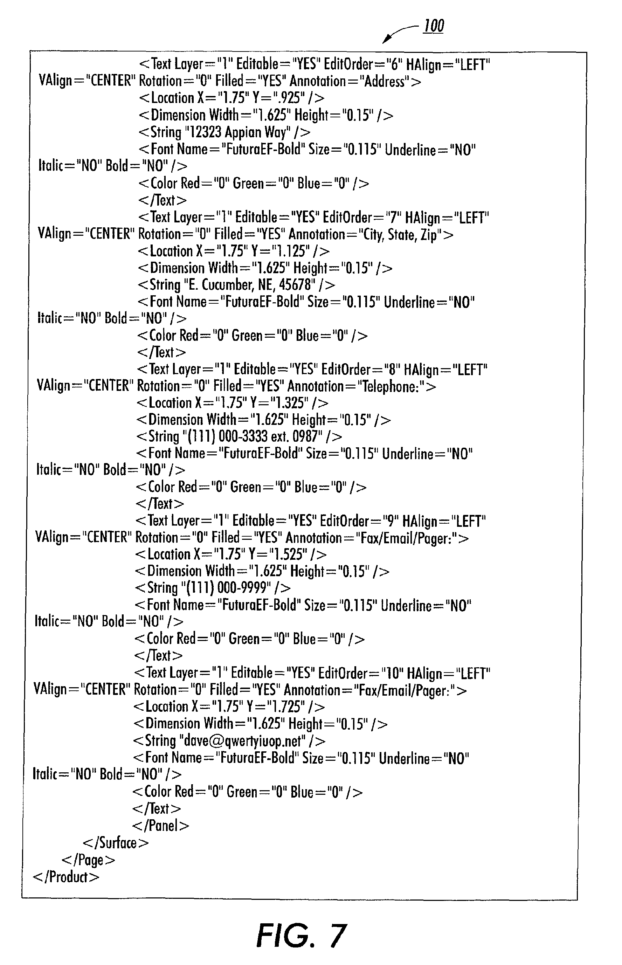

Figure 5 shows one possible overall arrangement of text fields and an image 70 on business card 28. The text formatting characteristics (chiefly font, positioning, line length) are determined by software application 22 and by entries in print template data file 20. Figures 6 and 7 show print template data file 20, embodied as an XML template file 100 in the preferred embodiment. In Figure 6, an XML entry 102 shows how employer field 42 is represented in XML template file 100 for business card 28. (In similar fashion, Figures 6 and 7 show XML template file 100 representations for each of the components of business card 28 as shown in Figure 5.)

It can be seen from the above description that software application 22 populates XML template file 100 with selected fields 38, 40, 42, 44, 48, 50, 52, and 58 using screen 64 for accepting user selections. XML template file 100 can then be used by software application 22 to generate personalized print item 26, having one or more business cards 28 printed thereon.

The above specification describes a few of the possible embodiments for the present invention. However, other embodiments are also possible within the scope of the present invention. For example, the present invention can be used with any suitable CPU 12 or microprocessor platform. Software application 22 can be embodied in any suitable programming language. Most importantly the present invention can be employed to print products other than business cards. To that end it may be useful to store other types of information on portable memory device 14, where software application 22 can be instructed to obtain the information and provide personalized print item 26 having other contents. For example, portable memory device 14 could be used to store a typical product description, a standard sales contract, brochure, map, or other document that it would be useful to generate on demand. These print items could then be customized by client contact information instead of, or in addition to the user's information. Software application 22 could also provide the capability for a user to further customize the print item by allowing editing of stored information or templates before printing.

The personalized output item 26 may or may not include image 70. If included, image 70 content could be other than a photographic likeness of a person and could instead be a logo, clip art, line drawing, or other figure. Image 70 could be other than from the scanner 16, and could itself be from storage on the portable memory device 14. Or, image 70 could be stored on some other electronically accessible medium (such as a diskette or CD, for example) for input to workstation 12. Printer system apparatus 10 could optionally include a digital camera, allowing a newly captured image to be included on personalized print item 26.

Wireless communication can be effected using a number of alternate technologies in addition to those specifically given as examples above. Alternate wireless communication technologies can include microwave transmission and ultrasound transmission. In one embodiment, a product template is stored in a computer using XML language format; however, the methods described here using an XML template could be alternately applied utilizing another document data storage format, whether standard or proprietary.

There are numerous operator interface options for assigning labels to individual data fields transferred from portable memory device 14. A software program could be developed to read and assign labels to specific fields by default, thereby further automating the preparation of personalized print item 26.

## Claims

1. A method for a printer apparatus to provide personalized print items, the printer apparatus executing steps comprising:
receiving data from a portable memory device;
prompting an operator to select a product template resident in the printer apparatus;
prompting the operator to select at least one field entry from the data;
assembling the field entry into the product template; and
printing the resultant personalized print item.

2. The method of claim 1, further comprising the step of prompting the operator to select a format for the field entry prior to the step of printing the resulting personalized print item.

3. The method of claim 1 or claim 2, further comprising the step of prompting the operator to enter appropriate text prior to the step of printing the resulting personalized print item.

4. The method of any of claims 1 to 3, further comprising the step of prompting the operator to scan an image or input an image from some other source prior to the step of printing the resulting personalized print item.

5. A printing system apparatus for providing a personalized print item from a portable memory device, comprising:
a reader for receiving data from the portable memory device;
at least one product template stored in a memory; and
a print engine where the reader receives data which is placed into the product template to produce a result that is then printed by the print engine.

6. The apparatus of claim 5, further comprising a software application which provides a user interface upon a display interface to allow the prompting of an operator of the printing system apparatus to specify the contents of the product template.

7. The apparatus of claim 5 or claim 6, where the reader provides wireless transmission to the portable memory device.

8. A method for a printer system to provide personalized print items, the printer system apparatus executing steps comprising:
accessing a portable memory device;
receiving data from the portable memory device;
assembling the data into a pre-stored product template found in the printer system; and
printing the resultant personalized print item.

9. The method of claim 8, further comprising the step of scanning for image data to be assembled into the product template.
